Europäisches Patentamt

European Patent Office

Office européen des brevets

(11) Publication number: **0 137 034**
**B1**

(12) # EUROPEAN PATENT SPECIFICATION

(45) Date of publication of patent specification: **19.11.87**

(21) Application number: **84901174.7**

(22) Date of filing: **27.12.83**

(86) International application number:
**PCT/US83/02066**

(87) International publication number:
**WO 84/03265 30.08.84 Gazette 84/21**

(51) Int. Cl.⁴: **B 63 B 1/34, F 42 B 19/00,
B 01 J 13/00, F 02 C 9/00**

(54) **METHOD OF REDUCING SURFACE FRICTION.**

(30) Priority: **28.02.83 US 470161**

(43) Date of publication of application:
**17.04.85 Bulletin 85/16**

(45) Publication of the grant of the patent:
**19.11.87 Bulletin 87/47**

(84) Designated Contracting States:
**BE DE FR GB NL**

(56) References cited:
**FR-A-1 453 877
US-A-3 075 489
US-A-3 205 846
US-A-3 732 839**

(73) Proprietor: **GOULD INC.
10 Gould Center
Rolling Meadows, IL 60008 (US)**

(72) Inventor: **THELLMANN, Edward, L.
18307 Orchard Hill Drive
Walton Hills, OH 44146 (US)**

(74) Representative: **Barrett, James William et al
A.A. THORNTON & CO. Northumberland House
303-306 High Holborn
London WC1V 7LE (GB)**

Courier Press, Leamington Spa, England.

## Description

This invention relates to boundary layer control and in particular to methods of reducing surface friction between a liquid and a body moving therethrough.

A desideratum in the art of propelled marine devices is the development of increased speed and range for a given propelling capacity. Illustratively, in the field of acoustic torpedoes, it is desirable to provide for increased payload without an increase in size or weight. One attempted solution to this problem is to provide means for sucking a small quantity of the ambient fluid through a porous outer member of the device so as to maintain a laminar flow over the surface thereof and thereby maintain desired boundary layer control. The effect of such suction is to stabilize the laminar boundary layer.

However, such boundary layer control has the serious disadvantage of increasing the skin friction over that of pure laminar flow.

Another attempted solution to the problem has been to provide means for heating the outer surface of the device so as to cause a boiling, or evaporation, of the ambient fluid at the outer surface, thereby tending to reduce the frictional drag. A serious defect of this method, as well as of the suction method described above, is the need for a source of energy carried by the device to effect the suction or boiling action. Such means reduces the effective payload, necessitating an increase in size and weight of the device.

In U.S. Letters Patent 3,361,213, Joseph G. Savins discloses a method of decreasing friction loss in turbulent liquids incorporating in the liquid quantities of a soap system creating a viscoelastic liquid. Where the turbulent condition occurs adjacent a submerged skin of a vehicle moving through the water, the incorporating of the soap system is effected by flowing at low rates of flow through small openings in the interior portion of the vehicle sufficient quantities of a concentrated viscoelastic solution of the soap system to create a thin layer of the viscoelastic liquid adjacent the skin, thereby allowing the vehicle to proceed through the water at an increased rate.

Jan Hulsebos et al disclose, in U.S. Letters Patent 3,392,693, a method of reducing drag by applying friction-reducing material to the exterior surfaces of an object moving through a fluid medium. The object is provided with at least one intake opening for admitting the ambient fluid and at least one outlet opening adjacent the forward end thereof, with a chamber adapted to contain the friction-reducing material internally of the object. The friction-reducing material is pelletized and interconnecting conduits are provided between the chamber and the respective intake and outlet openings, permitting the ambient fluid to enter into the chamber, contact the friction-reducing, pelletized material, and be ejected from the outlet opening. A screen is provided in at least one of the interconnecting conduits to prevent passage of the pellets therethrough.

In U.S. Letters Patent 3,973,510, Charles R. McCulloch et al teach provision of a polymeric drag reducing coating on a submersible object wherein the coating comprises at least 50% by weight of hydrophobic silica producing a nonuniform coating on the object. McCulloch et al teach the use of a tacky binding agent which is cured after the hydrophobic silica is applied thereto.

Another method of reducing drag between an object, such as a torpedo, and the ambient water is disclosed in U.S. Letters Patent 4,186,679 of Andrew G. Fabula et al. As disclosed therein, a polymeric drag-reducing material is carried in the torpedo in concentrated form. Ambient water is ingested and mixed with the concentrated polymer to produce a sea water-polymer solution of a predetermined concentration which is ejected from the torpedo nose to flow rearwardly in intimate contact with the exterior surface of the torpedo as a result of the forward motion thereof.

A method of reducing drag on a body having a blunt front end and adapted to move submerged relative to a liquid medium is disclosed in U.S. Letters Patent 3,075,459 of H.P. Eichenberger. As disclosed therein, a boundary layer of the liquid medium formed by contact with the front end of the body is incrementally withdrawn in successive annular patterns near the periphery of the blunt front end. A stable laminar gas film is caused to flow radially outwardly from near the outermost of said annular patterns of the blunt front end and thence around a major portion of the body surface.

The present invention comprehends an improved method of maintaining laminar flow of liquid along the outer surface of a body having relative movement through a liquid, which is extremely simple and economical. The invention provides the method of maintaining laminar flow of and acoustically decoupling from liquid along the outer surface of a body having a relative movement through said liquid by causing a portion of the body to emit a gas into said liquid. Such a method is known from U.S. Patent 3075489, for example; the invention, however, is characterized by the steps of:

providing a surface of the body formed of a composition of matter reactive with said liquid to evolve a gaseous reaction product on said surface portion of the body; and

releasing said gaseous reaction product into the liquid as relative movement between the body and liquid occurs.

Features and advantages of the invention will be apparent from the following description taken in connection with the accompanying drawing wherein:

Figure 1 is a side elevation of a torpedo moving through a body of sea water, with laminar flow being maintained on the surface thereof by a method embodying the invention; and

Figure 2 is a fragmentary enlarged section illustrating the arrangement of the surface portion of the object with the reactive coating and protective outer layer thereon.

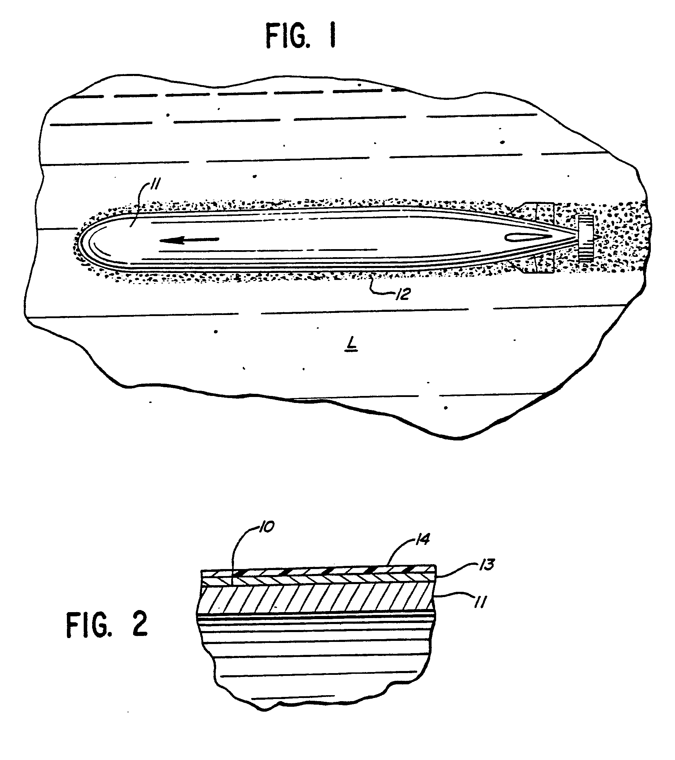

In the exemplary embodiment of the invention as disclosed in Figures 1 and 2 of the drawing, an improved method of maintaining laminar flow of liquid L along the outer surface 10 of a body 11 having relative movement through the liquid is shown to comprise the provision of a reaction product 12 on the surface which is released into the liquid as relative movement between the body and liquid occurs.

More specifically, in the illustrated embodiment, the invention comprehends providing on surface 10 a layer 13 of a composition of matter reactive with the liquid L to evolve the desired reaction product.

In the illustrated embodiment, layer 13 is formed on a known aluminum alloy which is reactive in an aqueous liquid, such as sea water, to produce hydrogen gas and aluminum hydroxide as reaction products.

The invention comprehends maintaining laminar flow of the liquid relative to the body by the evolution of the gaseous hydrogen in releasing it into the liquid L over substantially the entire surface of the body 11 which, in the illustrative embodiment, comprises a torpedo adapted to move through the body of sea water L.

Concurrently, the reaction of the aluminum alloy with the sea water produces long chains of aluminum hydroxide which stream out from the reactive layer so as to remove kinetic energy therefrom by elastic extension. The gaseous reaction product streams out concurrently from the reactive layer to further reduce friction and maintain the desired laminar flow.

It has further been found that the evolution of the gaseous reaction product provides an acoustic decoupling of the body and the ambient liquid. It would appear that the formation of the gaseous reaction product along surface 10 causes an effective mismatch in acoustic impedances so as to produce the desired decoupling.

The invention comprehends that the hydrogen and long chain aluminum hydroxide be formed in situ by reaction with the ambient liquid. The layer 13 of the aluminum alloy composition may be coated onto the body surface 10 by any suitable means as desired. Illustratively, the aluminum alloy layer may be provided by spraying the material onto the surface 10. In one form, the aluminum alloy was flame-sprayed onto the surface.

The invention further comprehends providing the coating 13 by preforming the coating and applying the preformed coating to the surface 10 by suitable means.

By controlling the composition of the aluminum alloy, a preselected reaction rate in the liquid L is readily obtained.

To prevent formation of the reaction product prior to the intended use, a protective cover may be provided over the layer 13, such as cover 14, as shown in Figure 2. The cover preferably comprises an impermeable membrane, and in one form, comprised an elastic impermeable membrane formed of a synthetic elastomer.

The aluminum alloy of layer 13 preferably has a melting point of about 538°C (1000°F).

Preferably, the reactive layer 13 is formed of a material having a density of no greater than approximately 4.15 g/cm$^3$ (0,15 lbs./in$^3$), and a tensile strength of at least about 137.9 MPa (20,000 psi).

Further preferably, the reactive layer material is exothermic in the evolution of the reaction product.

The aluminum alloy material is preselected to provide a reaction rate which increases with the pressure of the liquid L acting thereon.

One example of a water soluble aluminum alloy advantageously adapted for use in effecting the desired maintenance of laminar flow, as discussed above, is that marketed by TAFA Metallisation, Inc., of Concord, New Hampshire. The alloy, identified as TAFA Serial 300—301 aluminum alloy, has a density of 4.15 g/cm$^3$ (0.15 lbs./in$^3$), a tensile strength of 165 MPa (24,000 psi), a softening point of approximately 593°C (1100°F), a thermal conductivity of .28 G-cal/sec/cm$^2$/°C/cm @ 50°C, a specific heat of approximately 0.8 ku/kg (0.35 Btu/lb.), and a hardness $R_h$ 42. The rate of reaction with sea water increases at least approximately 1000 times at a depth providing a pressure of approximately 13.8 MPa. (2000 psi).

It would appear that the hydrogen bubbles produced as a gaseous reaction product of the soluble metal with the ambient liquid tend to disrupt the laminar sublayer so as to effectively eliminate this region of high shear. As the bubbles move away from the surface into the surrounding liquid, the bubbles tend to reduce the turbulent stresses by absorbing the momentum as a result of the elasticity of the bubbles. Drag reduction may be attributed to the variation in effective viscosity near the body surface 10. The positive viscosity gradient provides an increase in the curvature of velocity profile and, thus, contributes to the stability of the laminar boundary layer. It has been found that the optimum drag reduction is effected by bubble generation downstream of the boundary layer transition, and in a suitable distribution such that the bubble generation is effected subjacent substantially the entire turbulent boundary layer.

The provision of the gaseous reaction product and long chain reaction product as a result of the subjection of the reactive material to the ambient liquid further appears to provide a synergistic effect in reducing the drag and maintenance of the laminar flow and in acoustically decoupling the body 11 from the ambient liquid. The specific mechanism and phenomena involved in providing the improved drag reduction and acoustic decoupling may be other than those suggested above within the scope of the invention.

**Claims**

1. The method of maintaining laminar flow of and acoustically decoupling from liquid along the outer surface (13) of a body (11) having relative movement through said liquid by causing a portion of the body (11) to emit a gas (12) into said liquid, characterized by the steps of:

providing a surface portion (13) of the body (11) formed of a composition of matter reactive with said liquid to evolve a gaseous reaction product (12) on said surface portion (13) of the body (11); and

releasing said gaseous reaction product (12) into the liquid as relative movement between the body (11) and liquid occurs.

2. The method of claim 1 wherein the step of providing said surface portion (13) comprises a step of coating the body (11) with said composition.

3. The method of claim 1 wherein said composition comprises an aluminum composition.

4. The method of claim 1 wherein said gaseous reaction product (12) comprises hydrogen gas.

5. The method of claim 1 wherein said liquid comprises an aqueous liquid.

6. The method of claim 1 wherein the step of providing said surface portion (13) comprises a step of spraying said composition of matter onto said body (11).

7. The method of claim 1 wherein the reactive material is preselected to provide a preselected reaction rate in said liquid.

8. The method of claim 1 including the further steps of providing a protective cover (14) over the reactive material (13) to prevent premature evolution of the gaseous reaction product (12), and removing the cover (14) at the time of movement of the body (11) through said liquid.

9. The method of claim 1 including the further steps of providing an impermeable membrane (14) over the reactive material (13) to prevent premature evolution of the gaseous reaction product (12), and removing the membrane (14) at the time of movement of the body (11) through said liquid.

10. The method of claim 1 wherein said liquid comprises sea water.

11. The method of claim 1 wherein the step of providing said surface portion (13) comprises a step of flame spraying the reactive material onto said body (11).

12. The method of claim 1 wherein the reactive material (13) is prefabricated into a wall element (13) and said step of providing said surface portion (13) comprises a step of retaining said wall element (13) juxtaposed to said body (11).

13. The method of claim 1 including the further steps of providing a protective elastic cover (14) over the reactive material (13) to prevent premature reaction, and removing the cover (14) at the time of movement of the body (11) through said liquid.

14. The method of claim 1 wherein the reactive material (13) is preselected to have a melting point of about 538°C (1000°F).

15. The method of claim 1 wherein the reactive material (13) has a density of no greater than about 4.15 grams per cubic centimetre (0.15 pounds per cubic inch).

16. The method of claim 1 wherein the reactive material (13) has a tensile strength of at least about 137.9 MPa (20,000 psi).

17. The method of claim 1 wherein the reactive material (13) is preselected to provide an exothermic evolution of said reaction product (12) in said liquid.

18. The method of claim 1 wherein the reactive material (13) is preselected to provide a reaction rate which increases with the pressure of said liquid acting thereon.

19. The method of claim 1 wherein the gaseous reaction product (12) is provided at a leading portion of the moving body (11).

20. The method of claim 3 wherein the aluminum composition has an unoxidized surface covered by mercury.

**Patentansprüche**

1. Ein Verfahren zur Aufrechterhaltung einer laminaren Strömung und zur akustischen Entkoppelung einer Flüssigkeit längs der Außenfläche (13) eines Körpers (11) mit einer Relativbewegung durch diese Flüssigkeit, wobei ein Abschnitt des Körpers (11) ein Gas (12) in diese Flüssigkeit abgibt, dadurch gekennzeichnet, daß

ein Oberflächenabschnitt (13) des Körpers aus einer Materialzusammensetzung gebildet wird, die mit der Flüssigkeit unter Bildung eines gasförmigen Reaktionsproduktes (12) an diesem Oberflächenabschnitt (13) des Körpers (11) reagiert; und

das gasförmige Reaktionsprodukt (12) während der Relativbewegung zwischen Körper (11) und Flüssigkeit in die Flüssigkeit abgegeben wird.

2. Das Verfahren nach Anspruch 1, dadurch gekennzeichnet, daß der Körper (11) mit dieser Materialzusammensetzung beschichtet wird.

3. Das Verfahren nach Anspruch 1, dadurch gekennzeichnet, daß als Materialzusammensetzung ein Aluminium enthaltendes Material dient.

4. Das Verfahren nach Anspruch 1, dadurch gekennzeichnet, daß als gasförmiges Reaktionsprodukt (12) Wasserstoff erzeugt wird.

5. Das Verfahren nach Anspruch 1, dadurch gekennzeichnet, daß als Flüssigkeit eine wässerige Flüssigkeit dient.

6. Das Verfahren nach Anspruch 1, dadurch gekennzeichnet, daß zur Bildung des Oberflächenabschnittes (13) die ausgewählte Materialzusammensetzung auf den Körper (11) aufgesprüht wird.

7. Das Verfahren nach Anspruch 1, dadurch gekennzeichnet, daß die reaktionsfähige Materialzusammensetzung mit der Maßgabe einer vorgegebenen Reaktionsgeschwindigkeit in der Flüssigkeit ausgewählt wird.

8. Das Verfahren nach Anspruch 1, dadurch gekennzeichnet, daß über der reaktionsfähigen Materialzusammensetzung (13) eine Schutzschicht (14) vorgesehen wird, um eine vorzeitige Bildung des gasförmigen Reaktionsproduktes (12) zu vermeiden; und diese Schutzschicht (14) zu einem Zeitpunkt entfernt wird, wenn der Körper (11) durch die Flüssigkeit bewegt wird.

9. Das Verfahren nach Anspruch 1, dadurch gekennzeichnet, daß über der reaktionsfähigen Materialzusammensetzung (13) eine undurchlässige Folie (14) vorgesehen wird, um eine vorzeitige Entwicklung des gasförmigen Reaktionsproduktes (12) zu vermeiden; und diese Folie (14) zu einem Zeitpunkt entfernt wird, wenn der Körper (11) durch die Flüssigkeit bewegt wird.

10. Das Verfahren nach Anspruch 1, dadurch gekennzeichnet, daß als Flüssigkeit Meer- bzw. Salzwasser dient.

11. Des Verfahren nach Anspruch 1, dadurch gekennzeichnet, daß zur Bildung des Oberflächenabschnittes (13) die reaktionsfähige Materialzusammensetzung mittels Flammsprühen auf den Körper (11) aufgebracht wird.

12. Das Verfahren nach Anspruch 1, dadurch gekennzeichnet, daß die reaktionsfähige Materialzusammensetzung (13) als vorgefertigter Bestandteil in einem Wandelement (13) vorgesehen wird; und zur Bildung des bestimmten Oberflächenabschnittes (13) dieses Wandelement bezüglich des Körpers (11) festgehalten wird.

13. Das Verfahren nach Anspruch 1, dadurch gekennzeichnet, daß über der reaktionsfähigen Materialzusammensetzung (13) eine elastische Schutzabdeckung (14) vorgesehen wird, um eine vorzeitige Reaktion zu vermeiden; und diese Schutzabdeckung (14) zu einem Zeitpunkt entfernt wird, wenn der Körper (11) durch die Flüssigkeit bewegt wird.

14. Das Verfahren nach Anspruch 1, dadurch gekennzeichnet, daß als reaktionsfähige Materialzusammensetzung (13) ein Material mit einem Schmelzpunkt von ungefähr 538°C (1.000°F) ausgewählt wird.

15. Das Verfahren nach Anspruch 1, dadurch gekennzeichnet, daß als reaktionsfähige Materialzusammensetzung (13) ein Material mit einer Dichte nicht größer als ungefähr 4,15 g/cm³ (0.15 pound pro Kubikzoll) ausgewählt wird.

16. Das Verfahren nach Anspruch 1, dadurch gekennzeichnet, daß als reaktionsfähige Materialzusammensetzung (13) ein Material mit einer Zugfestigkeit von wenigstens ungefähr 137,9 MPa (20.000 psi) ausgewählt wird.

17. Das Verfahren nach Anspruch 1, dadurch gekennzeichnet, daß die reaktionsfähige Materialzusammensetzung (13) mit der Maßgabe ausgewählt wird, eine exotherme Reaktion zur Bildung des Reaktionsproduktes (12) in der Flüssigkeit zu gewährleisten.

18. Das Verfahren nach Anspruch 1, dadurch gekennzeichnet, daß die reaktionsfähige Materialzusammensetzung (13) mit der Maßgabe ausgewählt wird, eine Reaktionsgeschwindigkeit zu gewährleisten, die mit zunehmendem Druck der umgebenden, einwirkenden Flüssigkeit ansteigt.

19. Das Verfahren nach Anspruch 1, dadurch gekennzeichnet, daß das gasförmige Reaktionsprodukt (12) an einem vorderen Abschnitt des bewegten Körpers (11) erzeugt wird.

20. Das Verfahren nach Anspruch 3, dadurch gekennzeichnet, daß für das aluminiumhaltige Material eine nicht-oxidierte Oberfläche vorgesehen wird, welche mit Quecksilber bedeckt ist.

**Revendications**

1. Procédé de maintien d'un écoulement laminaire et de découplage acoustique par rapport à un liquide, le long de la surface extérieure (13) d'un corps (11) présentant un mouvement relatif à travers ce liquide, en faisant émettre à une partie du corps (11) un gaz (12) dans ledit liquide, caractérisé en ce qu'il consiste à réaliser une partie superficielle (13) du corps (11) qui est formée d'une composition de matière réagissant avec ledit liquide de façon à dégager un produit de réaction gazeux (12) sur cette partie superficielle (13) du corps (11), et à libérer ce produit de réaction gazeux (12) dans le liquide pendant que se produit le déplacement relatif entre le corps (11) et ce liquide.

2. Procédé de la revendication 1, dans lequel la fourniture de la partie superficielle (13) consiste à revêtir le corps (11) à l'aide de ladite composition.

3. Procédé de la revendication 1, dans lequel ladite composition est constituée d'une composition à base d'aluminium.

4. Procédé de la revendication 1, dans lequel le produit de réaction gazeux (12) est constitué d'hydrogène gazeux.

5. Procédé de la revendication 1, dans lequel ledit liquide est constitué d'un liquide aqueux.

6. Procédé de la revendication 1, dans lequel la réalisation de la partie superficielle (13) consiste à pulvériser ladite composition de matière sur le corps (11).

7. Procédé de la revendication 1, dans lequel le matériau réactif est sélectionné à l'avance de façon à fournir une vitesse de réaction dans le liquide qui est sélectionnée à l'avance.

8. Procédé de la revendication 1, consistant en outre à fournir un revêtement protecteur (14) par-dessus le matériau réactif (13) de façon à empêcher un dégagement prématuré du produit de réaction gazeux (12), et à retirer ce revêtement (14) au moment du déplacement du corps (11) à travers le liquide.

9. Procédé de la revendication 1, consistant en outre à fournir une membrane imperméable (14) par-dessus le matériau réactif (13) de façon à empêcher un dégagement prématuré du produit de réaction gazeux (12) et à retirer cette membrane (14) au moment du déplacement du corps (11) à travers le liquide.

10. Procédé de la revendication 1, dans lequel ledit liquide est constitué d'eau de mer.

11. Procédé de la revendication 1, dans lequel la réalisation de la partie superficielle (13) consiste à appliquer le matériau réactif sur le corps (11) au pistolet à flamme.

12. Procédé de la revendication 1, dans lequel le matériau réactif (13) est préfabriqué sous la forme d'un élément de paroi (13) et la réalisation de la partie superficielle (13) consiste à maintenir cet élément de paroi (13) de manière juxtaposée au corps (11).

13. Procédé de la revendication 1, consistant en outre à prévoir un revêtement élastique protecteur (14) par-dessus le matériau réactif (13) afin d'empêcher une réaction prématurée, et à retirer ce revêtement (14) au moment du déplacement du corps (11) à travers le liquide.

14. Procédé de la revendication 1, dans lequel le matériau réactif (13) est sélectionné à l'avance de façon à présenter un point de fusion d'environ 538°C (1000°F).

15. Procédé de la revendication 1, dans lequel le matériau réactif (13) présente une masse volumique ne dépassant environ 4,15 grammes par centimètre cube (0,15 livres par pouce cube).

16. Procédé de la revendication 1, dans lequel le matériau réactif (13) présente une résistance à la traction d'au moins 137,9 MPa (20 000 livres/pouce$^2$).

17. Procédé de la revendication 1, dans lequel le matériau réactif (13) est sélectionné à l'avance de façon à fournir un dégagement exothermique dudit produit de réaction (12) dans le liquide.

18. Procédé de la revendication 1, dans lequel le matériau réactif (13) est sélectionné à l'avance de façon à fournir une vitesse de réaction qui croît avec la pression du liquide qui agit sur lui.

19. Procédé de la revendication 1, dans lequel le produit de réaction gazeux (12) est prévu sur une partie avant du corps en déplacement (11).

20. Procédé de la revendication 3, dans lequel la composition d'aluminium présente une surface non oxydée recouverte de mercure.

# FIG. 1

# FIG. 2